# EUROPÄISCHE PATENTSCHRIFT

(11) **EP 3 091 246 B1**
(45) Veröffentlichungstag und Bekanntmachung des Hinweises auf die Patenterteilung: **14.03.2018**
(21) Anmeldenummer: 16000991.6
(22) Anmeldetag: 03.05.2016
(51) Int. Cl.: F16D 55/226, F16D 65/18

(54) **SCHEIBENBREMSE**
DISC BRAKE
FREIN À DISQUE

(30) Priorität: 04.05.2015 DE 102015106841
(43) Veröffentlichungstag der Anmeldung: 09.11.2016
(73) Patentinhaber: KNORR-BREMSE Systeme für Nutzfahrzeuge GmbH, 80809 München (DE)
(72) Erfinder: SIEBKE, Alf, 86938 Schondorf am Ammersee (DE)

(56) Entgegenhaltungen:
- EP-A1- 1 409 884
- DE-A1- 4 330 440
- US-A- 4 544 045

## Beschreibung

Die Erfindung betrifft eine Scheibenbremse nach dem Oberbegriff des Anspruchs 1, wie z.B. aus EP-B-1 409 884 hervorgeht. Fahrzeuge und bestimmte technische Geräte verwenden häufig Reibungsbremsen, um kinetische Energie umzuwandeln. Bevorzugt wird dabei speziell im Personenkraftwagen- und im Nutzfahrzeugbereich die Scheibenbremse. Bei der typischen Bauform einer Scheibenbremse besteht diese aus einem Bremssattel samt innerer Mechanik, aus in der Regel zwei Bremsbelägen und der Bremsscheibe. Der Bremssattel ist überwiegend als ein so genannter Schwimmsattel ausgebildet. Auf die innere Mechanik werden über eine Kraftquelle, z.B. über einen pneumatisch betätigten Zylinder, Kräfte durch eine Exzenter-Drehhebel-Zuspannung eingeleitet und als Zuspannkraft über Gewinderohre, die auch Gewindestempel, Gewindespindeln, Druckstempel o.ä. genannt werden, mit Druckstücken auf Bremsbeläge und Bremsscheibe übertragen, wobei über die Gewinderohre der Verschleiß von Bremsscheibe und Bremsbelägen ausgeglichen wird.

Die Zuspannkräfte wirken über beide Bremsbeläge auf die Bremsscheibe, welche in Abhängigkeit von der Höhe der Zuspannkraft eine Verzögerung der Rotationsbewegung erfährt. Die Bremsbeläge sind üblicherweise in einem Bremsträger aufgenommen. Der Bremsbelag, welcher auf der Zuspannseite der Bremsscheibe liegt, wird zuspannseitiger Bremsbelag genannt. Der andere Bremsbelag befindet sich auf der anderen Seite der Bremsscheibe und steht mit einem Sattelrücken des Bremssattels in Kontakt. Bei einem Bremsvorgang wird der zuspannseitige Belag in Richtung auf die Bremsscheibe bewegt. Sobald dieser sich in Kontakt mit der Bremsscheibe befindet, wird der Bremssattel durch die dabei entstehende Gegenkraft mit dem rückenseitigen Bremsbelag in Richtung auf die Bremsscheibe bewegt. Wenn nun der rückenseitige Bremsbelag auch die Bremsscheibe berührt, wird eine Bremswirkung erzeugt.

EP 0 566 008 A1 beschreibt eine druckluftbetätigte Scheibenbremse.

Im Bereich von Trommelbremsen werden häufig Nockenbetätigungen angewendet.

Es besteht ein ständiger Bedarf an Verbesserungen für Scheibenbremsen mit einfacherem Aufbau hinsichtlich Montage und Wartung sowie gleichzeitig erhöhter oder wenigstens gleicher Leistungsfähigkeit bei verringerten Herstellkosten.

Die Aufgabe der vorliegenden Erfindung besteht daher darin, eine verbesserte Scheibenbremse zu schaffen.

Die Aufgabe wird durch eine Scheibenbremse mit den Merkmalen des Anspruchs 1 gelöst.

Ein Grundgedanke der Erfindung besteht darin, eine Zuspannvorrichtung mit mindestens einem verschwenkbaren Nockenelement zu versehen. Das Nockenelement ist dabei zwischen einem Bremsbelag und einem Abschnitt des Bremssattels oder/und einem mit einem Abschnitt des Bremssattels verbundenen Teil angeordnet.

Eine erfindungsgemäße Scheibenbremse, vorzugsweise druckluftbetätigt, insbesondere für ein Kraftfahrzeug, umfasst eine Bremsscheibe, an welcher auf jeder Seite mindestens ein Bremsbelag angeordnet ist, einen Bremssattel, insbesondere ein Schiebesattel, welcher die Bremsscheibe zumindest teilweise übergreift, und eine Zuspannvorrichtung. Die Zuspannvorrichtung weist mindestens ein verschwenkbares Nockenelement, welches zwischen dem mindestens einen Bremsbelag und einem Abschnitt des Bremssattels oder/und einem mit einem Abschnitt des Bremssattels verbundenen Teil angeordnet ist, auf.

Das Nockenelement ist ein sehr robustes Bauteil und bietet einen zuverlässigen Betrieb auch unter erschwerten Bedingungen, sogar in nicht vollständig geschlossenen Gehäusen. Nockenelemente sind aus vielen technischen Anwendungen zur Umwandlung einer Drehbewegung in eine lineare Bewegung bekannt.

Das Nockenelement kann scheibenartig von einer bestimmten Scheibendicke sein. Denkbar ist aber auch, dass mehrere scheibenartige Nockenelemente übereinander angeordnet sind. Das Nockenelement kann aber auch als eine Nockenwelle bestimmter Länge ausgebildet sein.

Unter einem Abschnitt des Bremssattels ist in einem Fall z.B. eine Innenwand des Bremssattels zu verstehen, z.B. eines zuspannseitigen Abschnitts des Bremssattels. Dabei kann der Abschnitt des Bremssattels eine Wand oder z.B. auch eine Zugstrebe sein. Es ist aber auch möglich, dass ein mit dem Bremssattel verbundenes Teil vorgesehen ist, wie z.B. eine Zwischenplatte, ein Zugelement oder dergleichen.

In einer Ausführung ist das mindestens eine verschwenkbare S-förmig als ein S-Nockenelement ausgebildet. Eine solche Art hat sich im Trommelbremsenbereich unter schwierigen Umgebungsbedingungen bewährt und benötig außer im Bereich der Nockenwellenlager keine Schmierung.

Es ist vorgesehen, dass das mindestens eine verschwenkbare Nockenelement mit einer ersten Nockenfläche über eine Druckrolle mit dem mindestens einen Bremsbelag und mit einer zweiten Nockenfläche über eine Stützrolle mit dem einem Abschnitt des Bremssattels oder/und mit dem einen mit einem Abschnitt des Bremssattels verbundenen Teil in Kontakt steht. Auf diese Weise ist es vorteilhaft möglich, dass das Nockenelement in einer direkten Kraftwirkungslinie zwischen dem Bremsbelag und dem Bremssattel bzw. Bremsgehäuse bzw. einem damit verbundenen Teil angeordnet ist. Die Druckrollen und Stützrollen ergeben den Vorteil eines geringen Abrollwiderstands an den Nockenflächen. Natürlich sind andererseits auch Gleitpaarungen denkbar, bei welchen die Rollen als Gleitkörper ausgeführt sein können.

In einer alternativen Ausführung kann das eine mit einem Abschnitt des Bremssattels verbundene Teil als eine Brücke ausgebildet sein, welche über mindestens ein Zugelement mit dem Bremssattel verbunden ist. Dies ergibt einen besonders kompakten Aufbau, wobei in einem Ausführungsbeispiel die Brücke an ihren Enden mit jeweils mindestens einem Zugelement verbunden ist. Das Zugelement kann z.B. eine Zugstange sein, deren jeweiliges andere Ende am Bremssattel, z.B. an dessen Zugstreben, angebracht ist. Das mindestens eine verschwenkbare Nockenelement ist mit einem Bremsdrehhebel gekoppelt, wobei eine Betätigung des Bremsdrehhebels eine Verschwenkung des verschwenkbaren Nockenelementes bewirkt. Damit wird ein kompakter und einfacher Aufbau ermöglicht. Das mindestens eine verschwenkbare Nockenelement ist mit dem Bremsdrehhebel über ein verschiebbar geführtes Antriebselement und ein mit dem verschwenkbaren Nockenelement verbundenes Übertragungselement derart gekoppelt, dass eine Betätigung des Bremsdrehhebels eine Verschiebung des verschiebbar geführten Antriebselementes bewirkt, wobei die Verschiebung des Antriebselementes eine Verschwenkung des Übertragungselementes und des damit verbundenen verschwenkbaren Nockenelementes bewirkt. Auf diese Weise kann ein Hub z.B. eines Betätigungszylinders der Bremse auf die Nockenelemente übertragen werden und eine dem Hub entsprechende Verschwenkung der Nockenelemente erzeugen. Erfindungsgemäß ist es vorgesehen, dass das verschiebbar geführte Antriebselement und mit dem Übertragungselement über eine Verzahnung in Eingriff steht.

Ein besonderer Vorteil ergibt sich, wenn die Verzahnung eine Schneckenverzahnung ist, wobei das Antriebselement als eine Schneckenwelle ausgebildet ist, und wobei das Übertragungssegment ein Schneckenradsegment ist. Derartige Verzahnungen sind kostengünstig in hoher Qualität herstellbar.

Bei einer Bremsbetätigung, z.B. durch einen Druckluftzylinder, überträgt der Bremsdrehhebel seine Schwenkbewegung mittels des Antriebselementes und der Übertragungssegmente auf die Nockenelemente. Über die zwischen den Nockenelementen und dem Bremsbelag bzw. dem Bremssattel angeordneten Rollen (Druckrollen, Stützrollen) werden dadurch die erforderlichen Spannkräfte auf die Bremsbeläge ausgeübt.

Es ist außerdem vorteilhaft, wenn das verschiebbar geführte Antriebselement in seiner Längsrichtung um eine Antriebselementachse verdrehbar ist, da auf diese Weise die Schneckenverzahnung gleichzeitig für eine Kompensation von Verschleiß von Bremsbelägen und Bremsscheibe verwendet werden kann und somit Bauraum gespart werden kann.

So kann die erfindungsgemäße Scheibenbremse weiterhin eine Verschleißnachstelleinrichtung aufweisen, welche mit dem um seine Antriebselementachse verdrehbaren Antriebselement zur Kompensation eines Verschleißes von Bremsbelägen und Bremsscheibe gekoppelt ist.

In einer Ausführung sind das mindestens eine verschwenkbare Nockenelement, das Antriebselement und der Bremsdrehhebel ortsfest an einem Bremsträger der Scheibenbremse direkt oder indirekt über eine Antriebshalterung gelagert und/oder geführt angebracht. Auf diese Weise werden die Relativbewegungen der Bauteile zueinander sichergestellt, und es wird ein kompakter, raumsparender Aufbau erzielt.

In einer noch weiteren, bevorzugten Ausführung ist die Scheibenbremse als zweistempelige Scheibenbremse mit zwei Drucknockeneinheiten mit jeweils mindestens einem verschwenkbaren Nockenelement ausgebildet. Unter dem Begriff Drucknockeneinheit ist das verschwenkbare Nockenelement als Einheit mit dem Übertragungselement zu verstehen. In weiteren Ausgestaltungen sind auch die Druck- und Stützrollen mit ihren Lagern der Drucknockeneinheit zugeordnet.

Die Erfindung wird nun anhand beispielhafter Ausführungen mit Bezug auf die beigefügten Zeichnungen näher erläutert. Hierbei zeigen:
- Fig. 1-2: schematische Ansichten einer üblichen Scheibenbremse mit einer üblichen Zuspannvorrichtung;
- Fig. 3: eine schematische Schnittansicht eines ersten Ausführungsbeispiels einer erfindungsgemäßen Scheibenbremse; und
- Fig. 4: eine vergrößerte Ansicht einer Drucknockeneinheit nach Fig. 3; und
- Fig. 5: eine schematische Teilansicht eines zweiten Ausführungsbeispiels der erfindungsgemäßen Scheibenbremse.

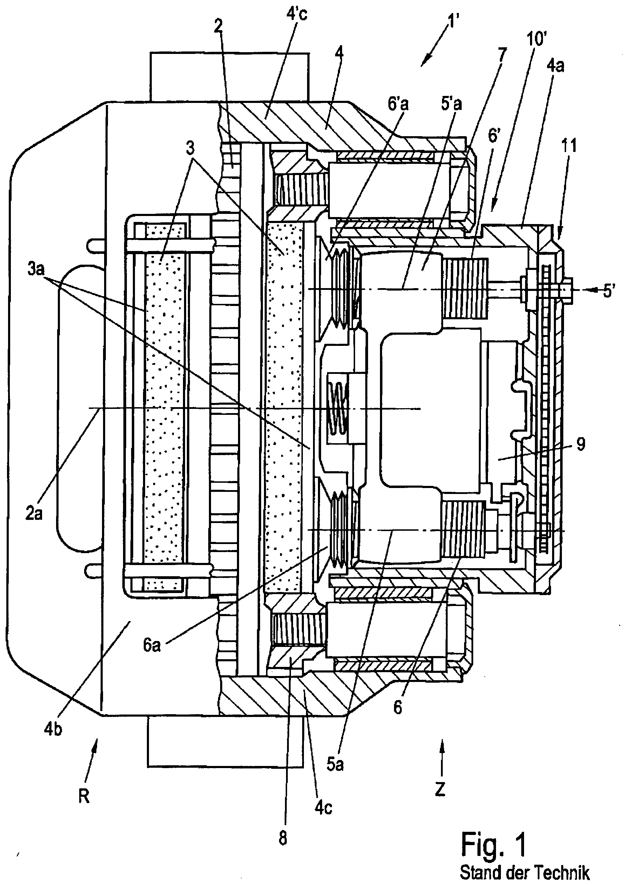

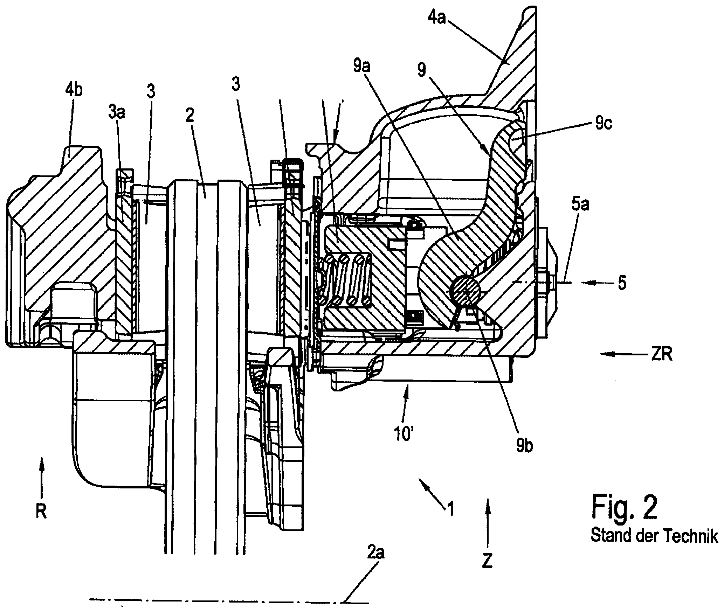

Fig. 1 zeigt eine schematische Teilschnittansicht einer üblichen Scheibenbremse 1' in einer Draufsicht. In Fig. 2 ist eine Teilschnittansicht der üblichen Scheibenbremse 1' nach Fig. 1 in einer Ebene in einer Bremsscheibenachse 2a senkrecht zur Zeichenebene der Fig. 1 dargestellt.

Die Scheibenbremse 1' weist eine Bremsscheibe 2 mit einer Bremsscheibenachse 2a auf. Die Bremsscheibe 2 ist von einem, hier als Schwimmsattel ausgeführten, Bremssattel 4 übergriffen. Beiderseits der Bremsscheibe 2 ist jeweils ein Bremsbelag 3 mit jeweils einem Bremsbelagträger 3a angeordnet.

Der Bremssattel 4 ist in nicht näher beschriebener Weise an einem Bremsträger 8 in Richtung der Bremsscheibenachse 2a verschiebbar angebracht. Der Bremssattel umfasst hier einen Zuspannabschnitt 4a und einen Sattelrücken 4b, welche jeweils an einer Seite der Bremsscheibe 2 angeordnet sind und an ihren Enden von jeweils einer Zugstrebe 4c, 4'c, die sich in Richtung der Bremsscheibenachse 2a über die Bremsscheibe 2 erstrecken.

Die Seite der Scheibenbremse 1', auf welcher der Zuspannabschnitt 4a des Bremssattels 4 angeordnet ist, wird hier als Zuspannseite Z bezeichnet, und die andere Seite der Scheibenbremse 1', auf welcher sich der Sattelrücken 4b befindet, wird hier Rückenseite R genannt. Dementsprechend wird der auf der Zuspannseite Z befindliche Bremsbelag 3 als zuspannseitiger Bremsbelag 3 und derjenige auf der Rückenseite R liegende als rückenseitiger Bremsbelag 3 bezeichnet.

Der Zuspannabschnitt 4a des Bremssattels 4 nimmt eine Zuspannvorrichtung 10' der Scheibenbremse 1' auf. Die Zuspannvorrichtung 10' der üblichen Scheibenbremse 1' umfasst hier zwei Spindeleinheiten 5 und 5' mit einer jeweiligen Spindelachse 5a, 5'a und mit jeweils einem Gewinderohr 6, 6', Druckstücke 6a, 6'a, eine Traverse 7 und einen Bremsdrehhebel 9.

Die Scheibenbremse 1' ist hier als zweistempelige Bremse mit den zwei Spindeleinheiten 5 und 5' mit jeweils einem Gewinderohr 6, 6'ausgebildet.

Der zuspannseitige Bremsbelag 3 steht über seinen Bremsbelagträger 3a mit den Spindeleinheiten 5, 5' an Enden der Gewinderohre 6, 6' über die Druckstücke 6a, 6'a in Verbindung. Der rückenseitige Bremsbelag 3 ist mit seinem Bremsbelagträger 3a auf der anderen Seite der Bremsscheibe 2 im Bremssattel 4 festgelegt und kontaktiert eine Innenseite des Sattelrückens 4b. Die Bremsbeläge 3 sind in so genannten Belagschächten des Bremsträgers 8 aufgenommen. Die Gewinderohre 6, 6' sind jeweils in der Traverse 7 in Gewinden verdrehbar angeordnet. Die Traverse 7 wird auch als Brücke bezeichnet.

Die Traverse 7 und somit die Gewinderohre 6, 6' sind von dem Bremsdrehhebel 9, der um eine rechtwinklig zu der Bremsscheibensachse 2a angeordnete Hebelachse 9b verschwenkt wird, in Richtung der Bremsscheibenachse 2a verstellbar. Der Bremsdrehhebel 9 weist einen 9 Hebelkörper 9a auf, welcher mit der Traverse 7 in Zusammenwirkung steht (siehe Fig. 2).

Die Scheibenbremse 1' kann unterschiedliche Kraftantriebe, z.B. pneumatische, hydraulische, elektrische, Kombinationen davon u.dgl. aufweisen. So kann der Bremsdrehhebel 9 mit einer Kolbenstange eines nicht gezeigten Druckluftzylinders in Wirkverbindung stehen, welcher üblicherweise an einem nicht näher bezeichneten Anschlussabschnitt (Fig. 2) des Zuspannabschnitts 4a des Bremssattels 4 angebracht ist, wobei die Kolbenstange des Druckluftzylinders an einem Betätigungsabschnitt 9c an einem Ende des Hebelkörpers 9a angreift.

Die Traverse 7 ist in Richtung der Bremsscheibenachse 2a durch den Bremsdrehhebel 9 verstellbar. Eine Bewegung auf die Bremsscheibe 2 in einer Zuspannrichtung ZR parallel zur Bremsscheibenachse 2a wird als Zuspannbewegung bezeichnet, und eine Bewegung in Gegenrichtung wird Lösebewegung genannt. Eine nicht näher bezeichnete Rückstellfeder ist in der Mitte der Traverse 7 in einer entsprechenden Ausnehmung auf der belagseitigen Seite der Traverse 7 aufgenommen und stützt sich am Bremssattel 4 ab. Mittels der Rückstellfeder wird die Traverse 7 bei der Lösebewegung in die in Fig. 1 gezeigte gelöste Stellung der Scheibenbremse 1' verstellt.

Beim Betätigen der Scheibenbremse 1' wird die benötigte Zuspannkraft über den exzentrisch zu den Spindeleinheiten 5, 5' gelagerten Bremsdrehhebel 9 erzeugt und auf die Traverse 7 übertragen. Die so auf die Traverse 21 übertragene Zuspannkraft wird dann durch die beiden Gewinderohre 6, 6'6 mit den Druckstücken 6a, 6'a auf den Bremsbelagträger 3a des zuspannseitigen Bremsbelags 3 und über den Bremssattel 8 (über die Zugstreben auf den Sattelrücken 4b) auch auf den Bremsbelagträger 3a des rückenseitigen Bremsbelags 3 und dann auf die Bremsscheibe 2 übertragen. Bei diesem Vorgang werden die Gewinderohre 6, 6' in Zuspannrichtung ZR auf die Bremsscheibe 2 zubewegt. Sobald der zuspannseitige Bremsbelag 3 mit seinem Reibbelag in Kontakt mit der Bremsscheibe 2 kommt, wird durch die entstehende Gegenkraft der Bremssattel 8 mit dem rückenseitigen Bremsbelag 3 auch in Richtung auf die Bremsscheibe 2 entgegengesetzt zu der Zuspannrichtung ZR des zuspannseitigen Bremsbelags 3 zubewegt. Sobald auch der Reibbelag des rückenseitigen Bremsbelags 3 die Bremsscheibe 2 berührt, wird eine Bremswirkung erzeugt.

Ein Abstand zwischen den Bremsbelägen 3 und der Bremsscheibe 2 in der gelösten Stellung wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Bremsdrehhebels 7, nicht mehr ausreicht. Eine solche Kompensation kann z.B. durch eine Verschleißnachstelleinrichtung bewirkt werden. Aufbau und Funktion einer beispielhaften Verschleißnachstellvorrichtung beschreibt das Dokument DE 10 2004 037 771 A1.

Weiterhin weist die Scheibenbremse 1' eine Synchroneinrichtung 11 auf, welche dazu dient, eine durch die Verschleißnachstelleinrichtung oder manuell bewirkte Verdrehung der Gewinderohre zur Nachstellung oder Rückstellung zwecks Belagwechsel auf beide Spindeleinheiten synchron zu übertragen. Aufbau und Funktion einer pneumatischen Scheibenbremse 1' mit einer Verschleißnachstelleinrichtung werden in dem Dokument DE 197 29 024 C1 näher beschrieben, auf welches hiermit verwiesen wird.

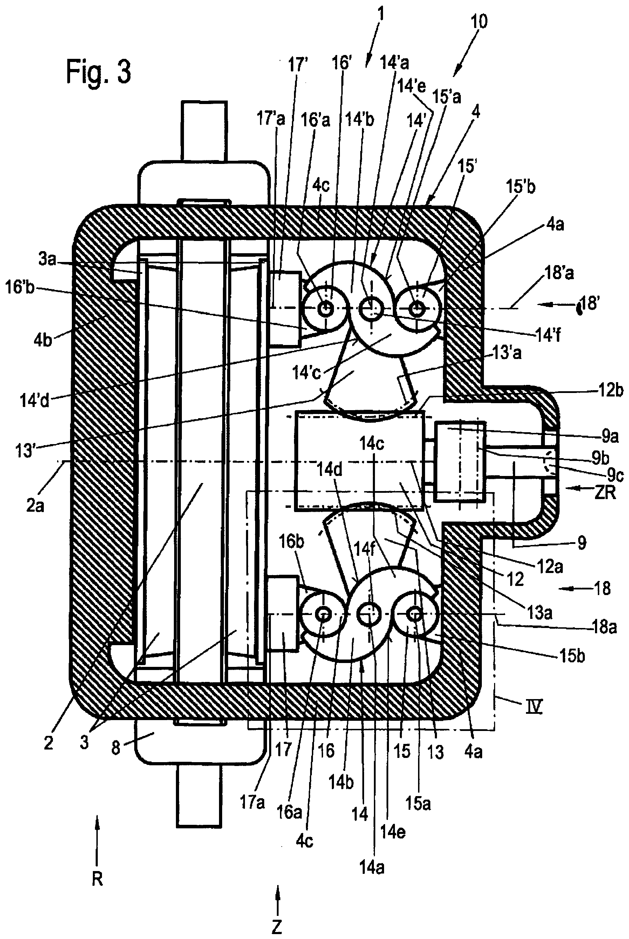

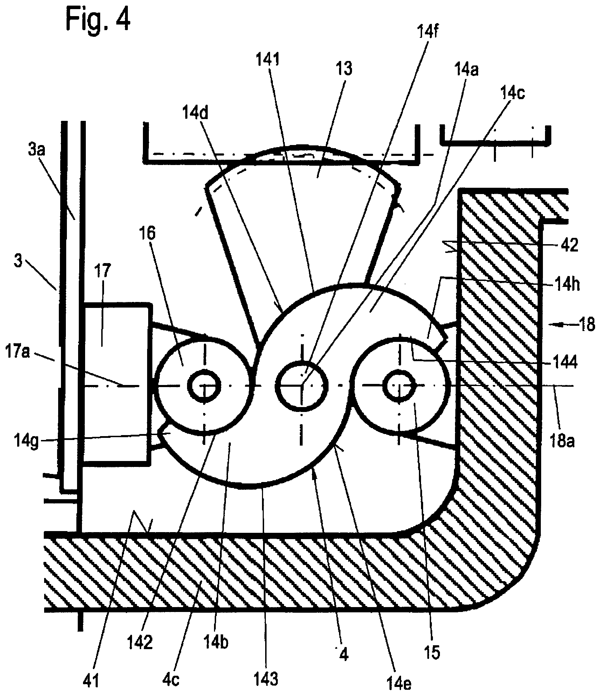

Fig. 3 stellt eine schematische Schnittansicht eines ersten Ausführungsbeispiels einer erfindungsgemäßen Scheibenbremse 1 in Draufsicht dar. Fig. 4 zeigt eine vergrößerte Ansicht der unteren Drucknockeneinheit 18 nach Fig. 3. Der Übersicht halber sind Führungsmittel für den Bremssattel 4 und für die Druckstücke 17, 17' nicht gezeigt, aber leicht vorstellbar.

In Fig. 3 und 4 ist die erfindungsgemäße Scheibenbremse 1 in Lösestellung gezeigt.

In diesem ersten Ausführungsbeispiel weist die Scheibenbremse 1 im Unterschied zu der üblichen Scheibenbremse 1' nach Fig. 1, 2 eine erfindungsgemäße Zuspannvorrichtung 10 auf, welche sich von der üblichen Zuspannvorrichtung 10' unterscheidet.

Der Bremssattel 4 der erfindungsgemäßen Scheibenbremse 1 umfasst den Zuspannabschnitt 4a, den Sattelrücken 4b und die zwei Zugstreben 4c, wobei die Form des Bremssattels 4 hier nur schematisch dargestellt ist und entsprechend der Ausgestaltung der Zuspannvorrichtung 10 angepasst sein kann.

Die erfindungsgemäße Zuspannvorrichtung 10 des ersten Ausführungsbeispiels der erfindungsgemäßen Scheibenbremse 1 umfasst einen Bremsdrehhebel 9, ein Antriebselement 12 und zwei Drucknockeneinheiten 18, 18' mit jeweils einer Druckachse 18a, 18'a. Die erste Drucknockeneinheit 18 mit der ersten Druckachse 18a ist in Fig. 3 unten angeordnet, wobei die zweite Drucknockeneinheit 18' mit der zweiten Druckachse 18'a in Fig. 3 oben angeordnet ist. Die Druckachsen 18a, 18'a verlaufen parallel zueinander und jeweils parallel zu der Bremsscheibenachse 2a. Jede der zwei Drucknockeneinheiten 18, 18' weist jeweils ein Nockenelement 14, 14' mit jeweils einem Übertragungssegment 13, 13', jeweils eine Stützrolle 15, 15', jeweils eine Druckrolle 16, 16' und jeweils ein Druckstück 17, 17' auf.

Der Bremsdrehhebel 9 weist den Hebelkörper 9a auf, welcher mit einem der Bremsscheibe 2 abgewandten Ende des Antriebselementes 12 in Kontakt steht. Weiterhin ist der Hebelkörper 9a an einem Ende mit dem Betätigungsabschnitt 9c (siehe auch Fig. 2) versehen, welcher mit der Kolbenstange eines nicht gezeigten Druckluftzylinders zusammenwirkt. Der Bremsdrehhebel 9 ist um seine Hebelachse 9c verschwenkbar, wobei die Hebelachse 9c hier rechtwinklig zu der Bremsscheibenachse 2a und parallel zu der Bremsscheibe 2 verläuft. Die Lagerung des Bremsdrehhebels 9 ist hier im Unterschied zu der üblichen Lagerung nach Fig. 1, 2 nicht im Bremssattel 4, sondern ortsfest über eine nicht näher gezeigte Antriebshalterung am Bremsträger 8 vorgesehen. Unter dem Begriff "ortsfest" ist hier eine ortsfeste Anbringung bzw. Verbindung mit dem Bremsträger 8 zu verstehen, welcher seinerseits fest an z.B. einer zugehörigen Radaufhängung angebracht ist. Dabei kann die Antriebshalterung ein separates Bauteil oder einstückig mit dem Bremsträger 8 ausgebildet sein. Dies wird unten noch weiter erläutert.

Das Antriebselement 12 weist eine Antriebselementachse 12a in seiner Längsrichtung auf und ist in Richtung dieser Antriebselementachse 12a einerseits hin und her verschiebbar und andererseits um die Antriebselementachse 12a verdrehbar in dem Zuspannabschnitt 4c des Bremssattels 4 angeordnet. Lagerung(en) zur Drehbarkeit um die Antriebselementachse 12a, sowie axiale Führung(en) des Antriebselementes 12 sind ortsfest in der nicht gezeigten Antriebshalterung, die am Bremsträger 8 befestigt ist, ausgebildet. Die Antriebselementachse 12a verläuft in gleicher Richtung wie die Bremsscheibenachse 2a bzw. in Richtung der Zuspannrichtung ZR und in entgegengesetzter Richtung.

Die Verdrehbarkeit des Antriebselementes 12 um seine Antriebselementachse 12a dient im Zusammenhang mit einer Verschleißnachstelleinrichtung zur Kompensation von Verschleiß von Bremsbelägen 3 und Bremsscheibe 2. Dies wird unten noch erläutert.

In diesem Ausführungsbeispiel die das Antriebselement 12 als eine zylinderförmige Walze mit einer Verzahnung 12b ausgebildet, wobei die Verzahnung 12b hier eine Schneckenverzahnung ist. Das Antriebselement 12 kann daher auch als Schneckenwelle bezeichnet werden. Diese Verzahnung 12b steht auf jeder Längsseite des Antriebselementes 12 (in Fig. 3 in Draufsicht beiderseits der Antriebselementachse 12a) mit einer der Verzahnung 12b des Antriebselementes 12 entsprechenden Verzahnung 13a, 13'a jeweils eines Übertragungssegmentes 13, 13' eines jeden Nockenelementes 14, 14' in Eingriff. So ist in diesem Beispiel jedes Übertragungssegment 13, 13' als ein Schneckenradsegment ausgebildet.

Die Drucknockeneinheiten 18, 18' werden im Folgenden anhand der in Fig. 3 unten angeordneten Drucknockeneinheit 18 beschrieben. Die hier spiegelbildlich zu der unten angeordneten Drucknockeneinheit 18 oben in Fig. 3 angeordnete Drucknockeneinheit 18' ist entsprechend aufgebaut und weist gleiche Bezugszeichen auf, die mit jeweils einem Apostroph ""' versehen sind.

Das Übertragungssegment 13 ist mit dem Nockenelement 14 drehfest verbunden und erstreckt sich zwischen dem Nockenelement 14 und dem Antriebselement 12, mit dessen Verzahnung 12b es in Eingriff steht.

Das Nockenelement 14 weist in der in Fig. 3 gezeigten Draufsicht einen so genannten S-förmigen Querschnitt senkrecht zu einer Nockenelementachse 14a auf. Ein solches S-förmiges Nockenelement 14 ist zum Beispiel aus Anwendungen bei so genannten S-Nocken-Trommelbremsen bekannt und umfasst zwei gegenüberliegende Nockenarme 14b und 14c, durch deren zentralen Mittelpunkt die Nockenelementachse 14a verläuft. Dieser zentrale Mittelpunkt ist gleichzeitig Symmetriepunkt des Querschnitts des Nockenelementes 14 in der in Fig. 3 gezeigten Ebene. Das Nockenelement 14 ist um diese Nockenelementachse 14a, welche senkrecht auf der Zeichnungsebene der Fig. 3 und senkrecht auf der Druckachse 18a steht, verschwenkbar. Dabei ist das Nockenelement 14 z.B. mittels eines Zapfens 14f bzw. einer Welle 14f oder dgl. ortsfest direkt am Bremsträger 8 (wie bei einer Trommelbremse) oder über die Antriebshalterung, auf die unten noch näher eingegangen wird, um die Nockenelementachse 14a verschwenkbar gelagert.

Das S-förmige Nockenelement 14 ist an seinen gegenüberliegenden, bogenförmigen Seiten jeweils mit einer Nockenfläche 14d, 14e versehen. Die Nockenflächen 14d, 14e erstrecken sich senkrecht zu der Zeichenebene der Fig. 3, 4. Hierzu zeigt Fig. 4 eine vergrößerte, übersichtlichere Ansicht. Die erste Nockenfläche 14d umfasst einen ersten Bogen 141 mit einem großen Radius und einen zweiten Bogen 142 mit einem Radius, der kleiner als der Radius des ersten Bogens 141 ist. Der erste Bogen 141 wölbt sich in Bezug auf die Druckachse 18a in den Innenraum des Zuspannabschnitts 4c, und der zweite, kleinere Bogen 142 wölbt sich entgegengesetzt zu dem ersten Bogen 141 zu einer seitlichen Innenwand 41 des Zuspannabschnitts 4c hin. Punktsymmetrisch dazu bezüglich des Symmetriepunkts in der Nockenelementachse 14a umfasst die zweite Nockenfläche 14e einen ersten Bogen 143 mit einem großen Radius und einen zweiten Bogen 144 mit einem Radius, der kleiner als der Radius des ersten Bogens 143 ist, wobei sich der erste Bogen 143 in Bezug auf die Druckachse 18a zu der seitlichen Innenwand 41 des Zuspannabschnitts 4c hin wölbt, wobei sich der zweite, kleinere Bogen 144 entgegengesetzt zu dem ersten Bogen 143 in den Innenraum des Zuspannabschnitts 4c wölbt. Diese Darstellung ist nur schematisch, wobei zwischen den jeweiligen Bögen 141, 142 und 143, 144 auch Übergangsbögen angeordnet sein können, die hier aber nicht betrachtet werden sollen.

Der Querschnitt des Nockenarms 14a ist daher gemäß Fig. 3 und 4 von der ersten Druckachse 18a, dem kleinen Bogen 142 der ersten Nockenfläche 14d, dem großen Bogen 143 der zweiten Nockenfläche 14e und einer Stirnfläche eines Endes 14g festgelegt. Punktsymmetrisch dazu bezüglich des Symmetriepunkts in der Nockenelementachse 14a ist der Querschnitt des anderen Nockenarms 14b von der ersten Druckachse 18a, dem kleinen Bogen 144 der zweiten Nockenfläche 14e, dem großen Bogen 141 der ersten Nockenfläche 14d und einer Stirnfläche eines Endes 14h festgelegt.

Jedes Nockenelement 14, 14' ist so angeordnet, dass es in einer direkten Kraftwirkungslinie (hier Druckachsen 18, 18') zwischen einer Stützrolle 15, 15' und einer Druckrolle 16, 16' liegt, mit denen es jeweils in Kontakt steht. Dies wird ebenfalls beispielhaft an der in Fig. 3 unten angeordneten Drucknockeneinheit 18 erläutert und gilt wie bereits angemerkt in entsprechender Weise auch für die spiegelbildlich oben angeordnete Drucknockeneinheit 18'.

Die Stützrolle 15 ist um eine Stützrollenachse 15a drehbar an einem Stützrollenhalter 15b gelagert. Die Stützrollenachse 15a verläuft parallel zu der Nockenelementachse 14a und liegt mit dieser in Reihe angeordnet auf der gemeinsamen Druckachse 18a der Drucknockeneinheit 18. Der Stützrollenhalter 15b ist an einer Innenwand 42 des Zuspannabschnitts 4c des Bremssattels 4 befestigt, wobei diese Innenwand 42 hier parallel zu der Bremsscheibe 2 verläuft.

Die Stützrolle 15 weist einen kreiszylinderförmigen Querschnitt auf und steht mit dem zweiten Nockenarm 14c des Nockenelementes 14 in Kontakt. Dabei berührt ein Teilabschnitt der umlaufenden Außenzylinderfläche der Stützrolle 15 den kleinen Bogen 144 der zweiten Nockenfläche 14e.

Die Druckrolle 16 ist um eine Druckrollenachse 16a drehbar an einem Druckrollenhalter 16b gelagert. Die Druckrollenachse 16a verläuft parallel zu der Nockenelementachse 14a und der Stützrollenachse 15a, wobei sie mit diesen in Reihe angeordnet auf der gemeinsamen Druckachse 18a der Drucknockeneinheit 18 liegt. Der Druckrollenhalter 16b ist auf einer Seite des Druckstücks 17, welche von der Bremsscheibe 2 abgewandt ist, angebracht. Das Druckstück 17 ist auf der Seite des Bremsbelagträgers 3a des zuspannseitigen Bremsbelags 3, welche ebenfalls von der Bremsscheibe 2 abgewandt ist, befestigt.

Die Druckrolle 16 weist wie die Stützrolle 15 einen kreiszylinderförmigen Querschnitt auf und steht mit dem ersten Nockenarm 14b des Nockenelementes 14 in Kontakt. Dabei berührt ein Teilabschnitt der umlaufenden Außenzylinderfläche der Druckrolle 16 den kleinen Bogen 142 der ersten Nockenfläche 14d.

Bei einer Bremsbetätigung zur Zuspannung der Scheibenbremse 1 beaufschlagt der (nicht gezeigte) Bremszylinder bzw. Druckluftzylinder über seine (nicht gezeigte) Kolbenstange in Kontakt mit dem Betätigungsabschnitt 9c den Bremsdrehhebel 9 derart, dass der Bremsdrehhebel 9 um seine Hebelachse 9b verschwenkt wird.

Der Bremsdrehhebel 9 verschiebt dabei das Antriebselement 12, welches in Kontakt mit dem Hebelkörper 9a steht, in Zuspannrichtung ZR auf die Bremsscheibe 2. Diese lineare Bewegung des Antriebselementes 12 wird mittels der Verzahnung 12b des Antriebselementes 12, welche in Eingriff mit den Verzahnungen 13a, 13'a der Abtriebselemente 13, 13' der beiden Drucknockeneinheiten 18, 18' steht, jeweils in eine Schwenkbewegung eines jeden Nockenelementes 14, 14' umgewandelt, wobei diese Schwenkbewegung der Nockenelemente 14, 14' dem Druckzylinderhub entspricht. Dabei verschwenkt das Nockenelement 14 der in Fig. 3 gezeigten unteren bzw. ersten Drucknockeneinheit 18 gegen den Uhrzeigersinn um seine Nockenelementachse 14a, und das Nockenelement 14' der in Fig. 3 gezeigten oberen bzw. zweiten Drucknockeneinheit 18' im Uhrzeigersinn um seine Nockenelementachse 14'a.

Somit werden zwischen den Nockenelementen 14, 14', Stützrollen 15, 15' und Druckrollen 16, 16' und somit zwischen dem Bremssattel 4 und dem zuspannseitigen Bremsbelag 3 die erforderlichen Zuspannkräfte durch den Druckzylinder ausgeübt. Dies wird nun näher erläutert.

Die jeweilige Schwenkbewegung der Nockenelemente 14, 14' um ihre Nockenelementachsen 14a, 14'a bewirkt, dass durch jeweilige Zusammenwirkung der Nockenflächen 14d, 14'd und 14e, 14'e mit der jeweils zugehörigen Stützrolle 15, 15' und gleichzeitig mit der jeweils zugehörigen Druckrolle 16, 16' die Stützrollen 15, 15' und die Druckrollen 16, 16' in Richtung der Bremsscheibenachse 2a voneinander weg bewegt werden, wobei ihr Abstand in Richtung der jeweiligen Druckachse 18a, 18'a voneinander zunimmt. Mit anderen Worten, die an den Druckstücken 17, 17' befestigten Druckrollen 16, 16' drücken den zuspannseitigen Bremsbelag 3 an die Bremsscheibe 2, und die am Zuspannabschnitt 4c des Bremssattels 4 befestigten Stützrollen 15, 15' verschieben aufgrund ihrer Befestigung am Bremssattel 4 diesen entgegen die Zuspannrichtung ZR, wodurch der rückenseitige Bremsbelag 3 an die Bremsscheibe 2 angelegt wird. Auf diese Weise erfolgt eine Bremsung durch die Zuspannung. Ein Lösen der Bremse erfolgt auf umgekehrtem Wege. Die beim Lösen zur Rückstellung der Zuspannvorrichtung 10 erforderlichen Rückstellfedern sind hier nicht gezeigt, aber leicht vorstellbar.

Die Funktion der Drucknockeneinheiten 18, 18' wird durch die schon oben angegebenen, ortsfest am Bremsträger 8 angebrachten Lagerungen und Führungen ermöglicht. Dazu kann wie schon oben erwähnt eine separate Antriebshalterung an dem Bremsträger 8 angebracht sein. Ebenso ist es denkbar, dass der Bremsträger 8 in entsprechender Weise einstückig mit einer solchen Antriebshalterung geformt ist. Die auf diese Weise ortsfest am Bremsträger 8 angeordneten Lagerungen und Führungen betreffen den Bremsdrehhebel 9, das Antriebselement 12 und die Nockenelemente 14, 14'. Zusätzlich ist im Unterschied zu der üblichen Scheibenbremse 1' nach Fig. 1, 2 der Bremszylinder bzw. Druckluftzylinder nicht am Bremssattel 4, sondern auch am Bremsträger 8 bzw. an der Antriebshalterung angebracht. Diese ortsfesten Anbringungen, Lagerungen und Führungen ermöglichen bestimmte Relativbewegungen der Funktionsbauteile untereinander und schließlich eine Verschiebebewegung des Bremssattels 4 relativ zu den ortsfest gelagerten und geführten Funktionsbauteilen. Dies wird im Folgenden erläutert.

Die Schwenkbewegung des Bremsdrehhebels 9 um seine ortsfeste Hebelachse 9b wird durch die Kolbenbewegung des ortsfesten Druckluftzylinders bewirkt und auf das Antriebselement 12 übertragen, welches in seiner ortsfesten Längsführung nun relativ zu der ortsfesten Hebelachse 9b verschoben wird. Die Verschiebebewegung des Antriebselementes 12 wird weiter über die in Eingriff stehenden Verzahnungen 12b, 13a und 13'a auf die Übertragungssegmente 13, 13' in eine Schwenkbewegung übertragen. Dies ist möglich, da die Übertragungssegmente 13, 13' fest mit den Nockenelementen 14, 14' verbunden und dadurch mit diesen jeweils um deren wiederum ortsfesten Nockenelementachsen 14a, 14'a verschwenkbar sind. Der Bremssattel 4 ist wie oben schon angegeben über nicht gezeigte Längslager am Bremssattel 4 verschiebbar geführt und somit relativ zu den ortsfesten Nockenelementachsen 14a, 14'a in Richtung der Bremsscheibenachse 2a verschiebbar. Auf diese Weise ist es möglich, dass durch Verschwenken der Nockenelementen 14, 14' um die ortsfesten Nockenelementachsen 14a, 14'a die Stützrollen 15, 15' verbunden mit dem Bremssattel 4 und die Druckrollen 16, 16' verbunden mit den Druckstücken 17, 17' und dem zuspannseitigen Bremsbelag 3 in Richtung der Bremsscheibenachse 2a gegeneinander verschoben werden können.

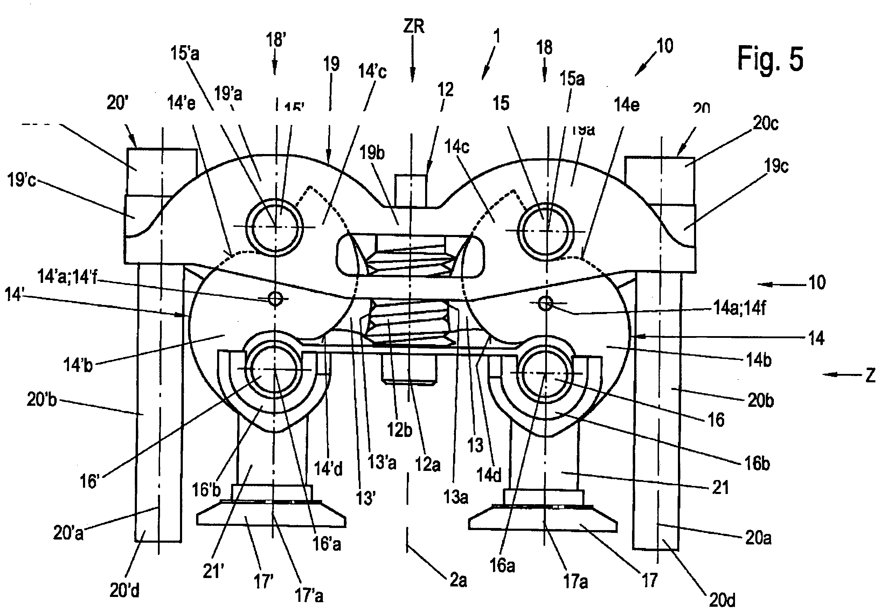

In Fig. 5 ist eine schematische Teilansicht eines zweiten Ausführungsbeispiels der erfindungsgemäßen Scheibenbremse 1 dargestellt.

Die erfindungsgemäße Zuspannvorrichtung 10 des zweiten Ausführungsbeispiels der erfindungsgemäßen Scheibenbremse 1 umfasst den hier nicht gezeigten Bremsdrehhebel 9, das Antriebselement 12 und die zwei Drucknockeneinheiten 18, 18' mit jeweils einer Druckachse 18a, 18'a. Die erste Drucknockeneinheit 18 mit der ersten Druckachse 18a ist in Fig. 5 rechts angeordnet, wobei die zweite Drucknockeneinheit 18' mit der zweiten Druckachse 18'a in Fig. 5 links angeordnet ist. Die Druckachsen 18a, 18'a verlaufen auch hier parallel zueinander und jeweils parallel zu der Bremsscheibenachse 2a sowie zur Zuspannrichtung ZR. Auch in diesem zweiten Ausführungsbeispiel weist jede der zwei Drucknockeneinheiten 18, 18' jeweils ein Nockenelement 14, 14' mit jeweils einem Übertragungssegment 13, 13', jeweils eine Stützrolle 15, 15', jeweils eine Druckrolle 16, 16' und jeweils ein Druckstück 17, 17' auf.

Es werden im Folgenden nur die Unterschiede zum ersten Ausführungsbeispiel erläutert. Zur Funktion und Ausbildung gleicher Bauteile und Bauteilgruppen wird auf die obige Beschreibung verwiesen.

Im Gegensatz zu dem ersten Ausführungsbeispiel nach Fig. 3-4 weist hier der Zuspannabschnitt 4a des Bremssattels 4 keinen Wandabschnitt mit einer Innenwand 42 auf. Der Bremssattel 4, der in Fig. 5 nicht dargestellt ist, umfasst hier im Vergleich mit dem Bremssattel nach Fig. 3 nur den Sattelrücken 4b und die Zugstreben 4c, 4'c, was mit Hilfe der Fig. 3 leicht vorstellbar ist.

Anstelle des Wandabschnitts mit der Innenwand 42 ist hier eine Brücke 19 parallel zu der Bremsscheibe 2 angeordnet. Die Brücke 19 weist zwei Stützabschnitte 19a und 19'a auf, welche in der Mitte der Brücke 19 durch einen Steg 19b miteinander verbunden sind. Jedes freie Ende eines jeden Stützabschnitts 19a, 19'a ist als ein Übertragungsabschnitt 19c, 19'c hier mit einer Durchstecköffnung ausgebildet, durch die jeweils ein Zugelement 20, 20' gesteckt ist.

Jeder Stützabschnitt 19a, 19'a der Brücke 19 ist in entgegengesetzter Zuspannrichtung ZR verdickt ausgebildet, wobei im Unterschied zu dem ersten Ausführungsbeispiel jeweils eine Stützrolle 15, 15' in einem Stützabschnitt 19a, 19'a um ihre jeweilige Stützrollenachse 15a, 15'a drehbar angeordnet und gelagert ist.

Jedes Zugelement 20, 20' ist hier als Rundstab mit jeweils einer Mittelachse 20a, 20'a, einem Zugkörper 20b, 20'b, einem Krafteinleitungsende 20c, 20'c und einem Verbindungsende 20d, 20'd ausgebildet.

Ein jeweiliges Krafteinleitungsende 20c, 20'c weist einen größeren Durchmesser als der Zugkörper 20b, 20'b auf und wirkt jeweils mit einem oberen Abschnitt eines jeweiligen Stützabschnitts 19a, 19'a der Brücke 19 zusammen, durch welchen jeweils ein Zugkörper 20b, 20'b von oben in Zuspannrichtung ZR hindurch gesteckt ist.

Jedes Zugelement 20, 20' kann als eine verlängerte Zugstrebe 4c, 4'c des Bremssattels 4 betrachtet werden, verläuft parallel in Zuspannrichtung ZR und zur Bremsscheibenachse 2a, und ist für eine feste Verbindung eines jeweiligen Verbindungsendes 20d, 20'd mit einer Zugstrebe 4c, 4'c vorgesehen. Dazu kann jedes Verbindungsende 20d, 20'd z.B. über ein Gewinde mit der zugehörigen Zugstrebe 4c, 4'c des Bremssattels 4 verbindbar sein.

Unterschiedlich zum ersten Ausführungsbeispiel sind die Druckrollen 16,16' jeweils über einen Druckstempel 21, 21' gelagert, der an einem Druckstück 17, 17' angebracht ist.

Eine Bremsbetätigung zur Zuspannung der Scheibenbremse 1 bewirkt wie bereits oben beschrieben eine jeweilige Schwenkbewegung der Nockenelemente 14, 14' um ihre Nockenelementachsen 14a, 14'a. Daraus ergibt sich auch hier, dass durch die jeweilige Zusammenwirkung der Nockenflächen 14d, 14'd und 14e, 14'e mit der jeweils zugehörigen Stützrolle 15, 15' und gleichzeitig mit der jeweils zugehörigen Druckrolle 16, 16' die Stützrollen 15, 15' und die Druckrollen 16, 16' in Richtung der Bremsscheibenachse 2a voneinander weg bewegt werden, wobei ihr Abstand in Richtung der jeweiligen Druckachse 18a, 18'a voneinander zunimmt. Dabei werden ebenfalls wie im ersten Ausführungsbeispiel die Druckstücke 17, 17' (hier an den unteren Enden der Druckstempel 21, 21') über die Druckrollen 16, 16' mit dem zuspannseitigen Bremsbelag 3 an die Bremsscheibe 2 gepresst.

Im Unterschied zum ersten Ausführungsbeispiel wird in dem in Fig. 5 gezeigten zweiten Ausführungsbeispiel die Brücke 19 durch die Stützrollen 15, 15' in die entgegengesetzte Richtung der Zuspannrichtung ZR verschoben, wobei diese Bewegung der Brücke 19 auf die beiden Zugelemente 20, 20' übertragen wird. Dabei wird die Kraft von den Übertragungsabschnitten 19c, 19'c jeweils auf das Krafteinleitungsende 20c, 20'c eines jeden Zugelementes 20, 20' eingeleitet. Von den Zugelementen 20, 20' wird diese Bewegung dann weiter auf die Zugstreben 4c, 4'c des Bremssattels 4 weitergeleitet, dessen Sattelrücken 4b in bereits oben beschriebener Weise den rückenseitigen Bremsbelag 3 an die Bremsscheibe 2 presst. Ein Lösen der Scheibenbremse 1 erfolgt auch hier auf umgekehrtem Wege.

Eine Führung der in Zuspannrichtung ZR und entgegengesetzt dazu verschiebbaren Brücke 19 und ihre Lagerung ist am ortsfesten Bremsträger 8 ausgebildet. Die Brücke 19 führt ihre Verschiebebewegung zusammen mit dem Sattelrücken 4b und den Zugstreben 4c, 4'c des Bremssattels 4 relativ zu dem Bremsträger 8 aus.

Zur Kompensation eines Verschleißes von Bremsbelägen 3 und Bremsscheibe 2 ist die Scheibenbremse 1 mit einer nicht dargestellten Verschleißnachstelleinrichtung ausgerüstet, welche mit dem Antriebselement 12 derart gekoppelt ist, dass das Antriebselement 12 eine Verschleißnachstellung bzw. Rückstellung ausgelöst durch die Verschleißnachstelleinrichtung durch Verdrehung um seine Antriebselementachse 12a bewirken kann. Für diesen Fall sind die Verzahnung 12b des Antriebselementes 12 und die Verzahnungen 13a, 13'a der Abtriebselemente 13 beispielsweise als Schneckenverzahnungen ausgebildet. Damit ist einerseits durch Verschiebung des Antriebselementes 12 eine Verschwenkung der Nockenelemente 14, 14' zur Zuspannung der Scheibenbremse 1 zur Zuspannung ermöglicht. Andererseits kann durch eine Verdrehung des Antriebselementes 12 eine Winkelstellung der Nockenelemente 14, 14' zur Verschleißkompensation von Bremsbelägen 3 und Bremsscheibe 2 erfolgen. Es sind natürlich auch andere Verschleißkompensationen durch Verschiebung des Antriebselementes 12 längs seiner Antriebselementachse 12a denkbar, z.B. durch ein längenveränderliches Zwischenbauteil zwischen Antriebselement 12 und Bremsdrehhebel 9. In einem solchen Fall können die Verzahnungen z.B. Stirnradverzahnungen sein.

Die im Vorhergehenden beschriebenen Ausführungsbeispiele schränken die Erfindung nicht ein. Sie ist im Rahmen der beigefügten Ansprüche modifizierbar.

Es ist denkbar, dass die Scheibenbremse 1 einstempelig, d.h. mit nur einer Drucknockeneinheit 18, 18', ausgeführt sein kann, oder auch mehr als zwei Drucknockeneinheiten 18, 18' aufweisen kann.

Das Nockenelement 14, 14' kann sich so in Richtung seiner Nockenelementachse 14a, 14'a erstrecken, dass eine Art Nockenwelle gebildet ist. Es ist andererseits aber auch möglich, dass mehrere Nockenelemente 14, 14' in Richtung der Nockenelementachse 14a, 14'a beabstandet und drehfest miteinander verbunden angeordnet sind. Dabei können entsprechende Stützrollen 15, 15' und Druckrollen 16, 16' zugeordnet sein. Die Stützrollen 15, 15' und Druckrollen 16, 16' können auch Walzen sein.

Weiterhin ist es denkbar, dass die Nockenflächen 14d, 14'd, 14e, 14'e unterschiedliche Bögen und/oder Kurvenverläufe aufweisen können.

Eine Verschleißkompensation könnte auch durch eine Winkelverstellung zwischen Nockenelement 14, 14' und dem jeweils zugehörigen Abtriebselement 13, 13' bewirkt werden.

Denkbar ist auch, dass die Nockenelemente 14, 14' nur mit einer Nockenfläche 14d, 14'd oder 14e, 14'e ausgebildet sind. In diesem Fall könnten die schwenkbaren Nockenelemente 14, 14' am Bremssattel 4 gelagert sein, wobei auch das Antriebselement 12 und der Bremsdrehhebel 9 am Bremssattel 4 gelagert und geführt sind, um die notwendigen Relativbewegungen der Funktionsbauteile zu ermöglichen. Dabei steht die nur eine Nockenfläche 14d, 14'd oder 14e, 14'e des jeweiligen Nockenelementes 14, 14' mit jeweils einer Druckrolle 16, 16' in Kontakt, wobei die Stützrollen 15, 15' nicht notwendig sind.

### Bezugszeichenliste

- 1, 1': Scheibenbremse
- 2: Bremsscheibe
- 2a: Bremsscheibenachse
- 3: Bremsbelag
- 3a: Bremsbelagträger
- 4: Bremssattel
- 4a: Zuspannabschnitt
- 4b: Sattelrücken
- 4c, 4'c: Zugstrebe
- 5, 5': Spindeleinheit
- 5a, 5'a: Spindelachse
- 6, 6': Gewinderohr
- 6a, 6'a: Druckstück
- 7: Traverse
- 8: Bremsträger
- 9: Bremsdrehhebel
- 9a: Hebelkörper
- 9b: Hebelachse
- 9c: Betätigungsabschnitt
- 10, 10': Zuspannvorrichtung
- 11: Synchroneinrichtung
- 12: Antriebselement
- 12a: Antriebselementachse
- 12b: Verzahnung
- 13, 13': Übertragungssegment
- 13a, 13'a: Verzahnung
- 14, 14': Nockenelement
- 14a, 14'a: Nockenelementachse
- 14b, 14'b; 14c, 14'c: Nockenarm
- 14d, 14'd; 14e, 14'e: Nockenfläche
- 14f, 14'f: Zapfen / Welle
- 14g, 14'g; 14h, 14'h: Ende
- 15, 15': Stützrolle
- 15a, 15'a: Stützrollenachse
- 15b, 15'b: Stützrollenhalter
- 16, 16': Druckrolle
- 16a, 16'a: Druckrollenachse
- 16b, 16'b: Druckrollenhalter
- 17, 17': Druckstück
- 17a, 17'a: Druckstückmittellinie
- 18, 18': Drucknockeneinheit
- 18a, 18'a: Druckachse
- 19: Brücke
- 19a, 19'a: Stützabschnitt
- 19b: Steg
- 19c, 19'c: Übertragungsabschnitt
- 20, 20': Zugelement
- 20a, 20'a: Mittelachse
- 20b, 20'b: Zugkörper
- 20c, 20'c: Krafteinleitungsende
- 20d, 20'd: Verbindungsende
- 21, 21': Druckstempel
- 41, 42: Innenwand
- 141, 142, 143, 144: Bogen

- R: Rückenseite
- Z: Zuspannseite
- ZR: Zuspannrichtung

## Patentansprüche

1. Scheibenbremse (1), vorzugsweise druckluftbetätigt, insbesondere für ein Kraftfahrzeug, aufweisend eine Bremsscheibe (2), an welcher auf jeder Seite mindestens ein Bremsbelag (3) angeordnet ist, einen Bremssattel (4), insbesondere ein Schiebesattel, welcher die Bremsscheibe (2) zumindest teilweise übergreift, und eine Zuspannvorrichtung (10), wobei die Zuspannvorrichtung (10) mindestens ein verschwenkbares Nockenelement (14, 14'), welches zwischen dem mindestens einen Bremsbelag (3) und einem Abschnitt des Bremssattels (4) oder/und einem mit einem Abschnitt des Bremssattels (4) verbundenen Teil angeordnet ist, aufweist, wobei das mindestens eine verschwenkbare Nockenelement (14, 14') mit einem Bremsdrehhebel (9) gekoppelt ist, wobei eine Betätigung des Bremsdrehhebels (9) eine Verschwenkung des verschwenkbaren Nockenelementes (14, 14') bewirkt, wobei das mindestens eine verschwenkbare Nockenelement (14, 14') mit dem Bremsdrehhebel (9) über ein verschiebbar geführtes Antriebselement (12) und ein mit dem verschwenkbaren Nockenelement (14, 14') verbundenes Übertragungselement (13, 13') derart gekoppelt ist, dass eine Betätigung des Bremsdrehhebels (9) eine Verschiebung des verschiebbar geführten Antriebselementes (12) bewirkt, wobei die Verschiebung des Antriebselementes (12) eine Verschwenkung des Übertragungselementes (13, 13') und des damit verbundenen verschwenkbaren Nockenelementes (14, 14') bewirkt,
**dadurch gekennzeichnet, dass**
das verschiebbar geführte Antriebselement (12) mit dem Übertragungselement (13, 13') über eine Verzahnung (12b, 13a, 13'a) in Eingriff steht.

2. Scheibenbremse (1) nach Anspruch 1 **dadurch gekennzeichnet, dass** das mindestens eine verschwenkbare Nockenelement (14, 14') S-förmig als ein S-Nockenelement ausgebildet ist.

3. Scheibenbremse (1) nach Anspruch 2, **dadurch gekennzeichnet, dass** das mindestens eine verschwenkbare Nockenelement (14, 14') mit einer ersten Nockenfläche (14d, 14'd) über eine Druckrolle (16, 16') mit dem mindestens einen Bremsbelag (3) und mit einer zweiten Nockenfläche (14e, 14'e) über eine Stützrolle (16, 16') mit dem einem Abschnitt des Bremssattels (4) oder/und mit dem einen mit einem Abschnitt des Bremssattels (4) verbundenen Teil in Kontakt steht.

4. Scheibenbremse (1) nach Anspruch 3, **dadurch gekennzeichnet, dass** das eine mit einem Abschnitt des Bremssattels (4) verbundenen Teil als eine Brücke (19) ausgebildet ist, welche über mindestens ein Zugelement (20, 20') mit dem Bremssattel (4) verbunden ist.

5. Scheibenbremse (1) nach Anspruch 1, **dadurch gekennzeichnet, dass** die Verzahnung (12b, 13a, 13'a) eine Schneckenverzahnung ist, wobei das Antriebselement (12) als eine Schneckenwelle ausgebildet ist, und wobei das Übertragungssegment (13, 13') ein Schneckenradsegment ist.

6. Scheibenbremse (1) nach Anspruch 5, **dadurch gekennzeichnet, dass** das verschiebbar geführte Antriebselement (12) in seiner Längsrichtung um eine Antriebselementachse (12a) verdrehbar ist.

7. Scheibenbremse (1) nach Anspruch 6, weiterhin aufweisend eine Verschleißnachstelleinrichtung, welche mit dem um seine Antriebselementachse (12a) verdrehbaren Antriebselement (12) zur Kompensation eines Verschleißes von Bremsbelägen (3) und Bremsscheibe (2) gekoppelt ist.

8. Scheibenbremse (1) nach einem der Ansprüche 5 bis 7, **dadurch gekennzeichnet, dass** das mindestens eine verschwenkbare Nockenelement (14, 14'), das Antriebselement (12) und der Bremsdrehhebel (9) ortsfest an einem Bremsträger (8) der Scheibenbremse (1) direkt oder indirekt über eine Antriebshalterung gelagert und/oder geführt angebracht sind.

9. Scheibenbremse (1) nach einem der vorhergehenden Ansprüche, **dadurch gekennzeichnet, dass** die Scheibenbremse (1) als zweistempelige Scheibenbremse (1) mit zwei Drucknockeneinheiten (18, 18') mit jeweils mindestens einem verschwenkbaren Nockenelement (14, 14') ausgebildet ist.

## Claims

1. A disc brake (1), preferably pneumatically actuated, in particular for a motor vehicle, comprising a brake disc (2), on each side of which is arranged at least one brake lining (3), a brake caliper (4), in particular a sliding brake caliper, which at least partially overlaps the brake disc (2), and an application device (10), wherein the application device (10) comprises at least one pivotable cam element (14, 14') arranged between the at least one brake lining (3) and a portion of the brake caliper (4) and/or a part connected to a portion of the brake caliper (4), wherein the at least one pivotable cam element (14, 14') is coupled to a rotary brake lever (9), wherein actuation of the rotary brake lever (9) causes the pivotable cam element (14, 14') to pivot, wherein the at least one pivotable cam element (14, 14') is coupled to the rotary brake lever (9) via a slidably guided drive element (12) and to a transmission element (13, 13') connected to the pivotable cam element (14, 14') such that actuation of the rotary brake lever (9) causes the slidably guided drive element (12) to slide, wherein the sliding of the drive element (12) causes the transmission element (13, 13') and the pivotable cam element (14, 14') connected to it to pivot, **characterised in that** the slidably guided drive element (12) engages with the transmission element (13, 13') via teeth (12b, 13a, 13'a).

2. A disc brake (1) according to claim 1, **characterised in that** the at least one pivotable cam element (14, 14') is designed in an S-shape as an S-shaped cam element.

3. A disc brake (1) according to claim 2, **characterised in that** a first cam surface (14d, 14'd) of the at least one pivotable cam element (14, 14') is in contact with the at least one brake lining (3) via a pressure roller (16, 16') and that a second cam surface (14e, 14'e) of the at least one pivotable cam element (14, 14') is in contact with the one portion of the brake caliper (4) and/or the one part connected to a portion of the brake caliper (4) via a support roller (16, 16').

4. A disc brake (1) according to claim 3, **characterised in that** the one part connected to a portion of the brake caliper (4) is designed as a bridge (19), which is connected to the brake caliper (4) by at least one traction element (20, 20').

5. A disc brake (1) according to claim 1, **characterised in that** the teeth (12b, 13a, 13'a) is a worm gear, wherein the drive element (12) is designed as a worm shaft and the transmission segment (13, 13') is a worm wheel segment.

6. A disc brake (1) according to claim 5, **characterised in that** the slidably guided drive element (12) can be rotated lengthwise about a drive element axis (12a).

7. A disc brake (1) according to claim 6, also comprising a wear adjustment device that is coupled to the drive element (12), which can be rotated about its drive element axis (12a), to compensate for wear of the brake linings (3) and the brake disc (2).

8. A disc brake (1) according to one of claims 5 to 7, **characterised in that** the at least one pivotable cam element (14, 14'), the drive element (12) and the rotary brake lever (9) are attached in a fixed manner, either directly or indirectly, mounted and/or guided by a drive bracket, on a brake carrier (8) of the disc brake (1).

9. A disc brake (1) according to one of the preceding claims, **characterised in that** the disc brake (1) is embodied as a double-jaw disc brake (1) having two pressure cam units (18, 18') each having at least one pivotable cam element (14, 14').

## Revendications

1. Frein (1) à disque, de préférence à actionnement par de l'air comprimé, notamment pour un véhicule automobile, comportant un disque (2) de frein sur lequel au moins une garniture (3) de frein est montée de chaque côté, un étrier (4) de frein, notamment un étrier coulissant, qui enjambe le disque (2) de frein, au moins en partie, et un dispositif (10) de serrage, le dispositif (10) de serrage ayant au moins un élément (14, 14') à bossage pivotant, qui est monté entre la au moins une garniture (3) de frein et un segment de l'étrier (4) de frein ou/et une partie reliée à un segment de l'étrier (4) de frein, le au moins un élément (14, 14') à bossage pivotant étant adjoint à un levier (9) tournant de frein, un actionnement du levier (9) tournant de frein provoquant un pivotement de l'élément (14, 14') à bossage pivotant, le au moins un élément (14, 14') à bossage pivotant étant adjoint au levier (9) tournant de frein par l'intermédiaire d'un élément (12) d'entraînement guidé à coulissement et d'un élément (13, 13') de transmission relié à l'élément (14, 14') à bossage pivotant, de manière à ce qu'un actionnement du levier (9) tournant de frein provoque un coulissement de l'élément (12) d'entraînement guidé à coulissement, le coulissement de l'élément (12) d'entraînement provoquant un pivotement de l'élément (13, 13') de transmission et de l'élément (14, 14') à bossage pivotant, qui y est relié, **caractérisé en ce que**
l'élément (12) d'entraînement guidé à coulissement engrène avec l'élément (13, 13') de transmission par un engrenage (12b, 13a, 13'a).

2. Frein (1) à disque suivant la revendication 1, **caractérisé en ce que** le au moins un élément (14, 14') à bossage pivotant est constitué en forme de S en élément à bossage en S.

3. Frein (1) à disque suivant la revendication 2, **caractérisé en ce que** le au moins un élément (14, 14') à bossage pivotant est en contact, par une première surface (14d, 14'd) de bossage, par l'intermédiaire d'un rouleau (16, 16') de pression, avec la au moins une garniture (3) de frein, et par une deuxième surface (14e, 14'e) de bossage, par l'intermédiaire d'un rouleau (16, 16') d'appui, avec le un segment de l'étrier (4) de frein ou/et avec la une partie reliée à un segment de l'étrier (4) de frein.

4. Frein (1) à disque suivant la revendication 3, **caractérisé en ce que** la une partie reliée à un segment de l'étrier (4) de frein est constituée sous la forme d'un pontet (19), qui est relié à l'étrier (4) de frein par au moins un élément (20, 20') de traction.

5. Frein (1) à disque suivant la revendication 1, **caractérisé en ce que** l'engrenage (12b, 13a, 13'a) est un engrenage à vis sans fin, l'élément (12) d'entraînement étant constitué sous la forme d'un arbre à vis et le segment (13, 13') de transmission sous la forme d'un segment de roue à vis.

6. Frein (1) à disque suivant la revendication 5, **caractérisé en ce que** l'élément (12) d'entraînement guidé à coulissement peut, dans sa direction longitudinale, tourner autour d'un axe (12a) d'élément d'entraînement.

7. Frein (1) à disque suivant la revendication 6, comportant en outre un dispositif de rattrapage d'usure, qui, pour compenser une usure des garnitures (3) de frein et du disque (2) de frein, est adjoint à l'élément (12) d'entraînement pouvant tourner autour de son axe (12a) d'élément d'entraînement.

8. Frein (1) à disque suivant l'une des revendications 5 à 7, **caractérisé en ce que** le au moins un élément (14, 14') à bossage pivotant, l'élément (12) d'entraînement et le levier (9) tournant de frein sont montés et/ou guidés directement ou indirectement par une fixation d'entraînement à poste fixe sur un porte-frein (8) du frein (1) à disque.

9. Frein (1) à disque suivant l'une des revendications précédentes, **caractérisé en ce que** le frein (1) à disque est constitué sous la forme d'un frein (1) à disque à deux pistons, ayant deux unités (18, 18') de bossage de pression, ayant chacune au moins un élément (14, 14') à bossage pivotant.
